Europäisches Patentamt

European Patent Office

Office européen des brevets

(19)

(11) Veröffentlichungsnummer: **0 014 242**
**B1**

# (12) EUROPÄISCHE PATENTSCHRIFT

(45) Veröffentlichungstag der Patentschrift:
05.05.82

(51) Int. Cl.³: **G 01 S 13/52, G 01 S 13/66**

(21) Anmeldenummer: **79104826.7**

(22) Anmeldetag: **01.12.79**

(54) **Anordnung zur Unterdrückung von Wetterechos in einem Impulsdoppler-Folge-Radargerät.**

(30) Priorität: **05.02.79 CH 1093/79**

(73) Patentinhaber: **SIEMENS-ALBIS AKTIENGESELLSCHAFT, EGA1/Verträge und Patente Postfach, CH-8047 Zürich (CH)**

(43) Veröffentlichungstag der Anmeldung:
**20.08.80 Patentblatt 80/17**

(72) Erfinder: **Küpfer, Hanspeter, Allmendstrasse 1, CH-8142 Ultikon (CH)**

(45) Bekanntmachung des Hinweises auf die Patenterteilung:
**05.05.82 Patentblatt 82/18**

(84) Benannte Vertragsstaaten:
**BE DE FR GB IT NL**

(56) Entgegenhaltungen:
**CH-A5-566 012**
**FR-A-2 103 466**
**US-A-3 522 604**
**US-A-3 707 718**
**US-A-4 062 011**
**US-A-4 093 949**

**Skolnik M.I.,**
**Radar Handbook, McGraw-Hill 1970,**
**S. 21-6, 21-10, 21-41**

## Anordnung zur Unterdrückung von Wetterechos in einem Impulsdoppler-Folge-Radargerät

Die vorliegende Erfindung betrifft eine Anordnung zur Unterdrückung von Wetterechos gemäss dem Oberbegriff des Patentanspruches 1.

Hat ein Folgeradar ein bewegtes Ziel in einem von bewegten Wetterechos gefüllten Raum zu verfolgen, so sollen nicht die Festzeichen, sondern die Wetterechos aus den sich bewegenden Wetterzonen, d.h. die Bewegtzeichen eines bestimmten Radialgeschwindigkeitsbereiches unterdrückt werden. Diese Unterdrückung lässt sich grundsätzlich dann durchführen, wenn erstens die Differenz der Radialgeschwindigkeiten von Ziel- und Wetterechos genügend gross ist und zweitens die Geschwindigkeit der Wetterechos festgestellt werden kann. Die erste Bedingung ist vom Radar nicht beeinflussbar, wird aber in vielen Anwendungen oft erfüllt.

Eine bekannte Methode zur Unterdrückung der Wetterechos beruht auf einer Einseitenbandmodulation des Phasenreferenzsignals. Zur jeweiligen optimalen Kompensationswertbestimmung ist beispielsweise aus der CH-PS Nr. 566012 eine Methode bekannt, bei der die Wetterechogeschwindigkeit in einem zusätzlichen Wetterechomesstor ermittel wird. Dabei wird eine Anzahl diskreter Kompensationsfrequenzwerte automatisch durchgetestet und derjenige, der jeweils zur Kompensation des Wetterechos im Verfolgungsmesstor am besten geeignet ist, ausgewählt. Ein solches Verfahren erweist sich jedoch als nachteilig, weil die Messung der Wetterechogeschwindigkeit und die Wetterechokompensation sich nicht auf das gleiche Raumvolumen beziehen können, da das Wetterechomesstor gegenüber dem Verfolgungsmesstor verschoben sein muss. Zudem arbeitet eine Anordnung nach diesem Verfahren relativ langsam, da sie nicht zielstrebig ist und daher viele unbrauchbare Kompensationswerte durchtesten muss. Da das Vorzeichen der Geschwindigkeit der Wetterechos nur mittels Durchtesten der verschiedenen Kompensationswerte ermittelbar ist, ist eine Zielstrebigkeit nicht erreichbar.

Eine weitere Anordnung zur Unterdrückung von Wetterechos ist aus der US-PS-Nr. 3522604 bekannt, wo ein Trackingsystem beschrieben ist, das grundsätzlich den Merkmalen des Oberbegriffs des Patentanspruches 1 entspricht. Dieses Trackingsystem betrifft insbesondere ein Radargerät ohne Quadraturkanal, arbeitet mit einem einzigen Radarvolumen in zwei zeitlich verschobenen Arbeitsphasen und weist einen Diskriminator für eine Frequenz auf, deren Wert ¼ per Pulswiederholungsfrequenz fr beträgt. Dies erweist sich indessen als nachteilig, wenn zwecks Vermeidung von Blindgeschwindigkeiten die Pulswiederholungsfrequenz fr systematisch umgeschaltet werden soll. Das Trackingsystem mit dem Frequenzdiskriminator für die Frequenz fr/4 kann nämlich in einem solchen Fall nicht mehr funktionieren, wenn der Frequenzdiskriminator nicht ebenfalls umgeschaltet wird, was jedoch zu einer aufwendigen und schwer realisierbaren Lösung führt.

Zweck der vorliegenden Erfindung ist es nun, eine Anordnung zur Unterdrückung von Wetterechos anzugeben, die diese Nachteile nicht aufweist.

Dies wird erfindungsgemäss durch die im kennzeichnenden Teil des Patentanspruches 1 angegebenen Massnahmen erreicht.

Vorteilhafte Ausgestaltungen der Erfindung sind in weiteren Ansprüchen angegeben.

Die erfindungsgemässe Anordnung arbeitet zielstrebig und ermöglicht daher den Aufbau eines geschlossenen Regelkreises. Die Wetterechomessanordnung liefert ein Ausgangssignal, welches ein vorzeichenbehaftetes Mass für die Abweichung vom optimalen Wert der Kompensationsfrequenz darstellt. Die Messung der Wetterechogeschwindigkeit erfolgt daher direkt im Verfolgungsvolumen des Folgeradargerätes und geschieht auch trotz Anwesenheit eines Zieles.

Dies ist möglich wegen der unterschiedlichen Korrelationseigenschaften von Zielecho und Wetterechos in den beiden Radarvolumenhälften, die durch die in der Technik des Folgeradars übliche Zweiteilung des Volumens zwecks Bildung von Fehlersignalen entstehen. In diesen beiden Radarvolumenhälften ist das Zielecho in hohem Mass korreliert, d.h. es weist in beiden Hälften die gleiche Phasenlage auf, da es von einem gegenüber der Radarimpulslänge kleinen Objekt herrührt. Die Wetterechos sind dagegen sehr wenig korreliert, d.h. die Wetterechos weisen verschiedene Phasenlagen auf, da nur ein kleiner Anteil der reflektierenden Teilchen der Wetterzone zugleich einen Echoanteil in beide Radarvolumenhälften wirft. Werden nun die gespeicherten Echosignale der beiden Volumenhälften voneinander subtrahiert, so erhält man im wesentlichen nur die Bewegungskomponente der Wetterechos (verschiedene Phasen), während das Zielecho (gleiche Phase) eliminiert wird. Das Verhältnis von Radarstrahlbreite zu Zielbreite wird bei grossen Distanzen extrem gross und deshalb, wenn das Volumen im Winkel halbiert wird, für die Messung der Wetterechodopplerfrequenz gemäss der vorliegenden Erfindung sehr günstig. Denn gerade bei grossen Zieldistanzen ist wegen der geringen Stärke der auszuwertenden Zielechos eine gute Wetterechounterdrückung besonders wichtig.

Die Erfindung wird durch Beschreibung von Ausführungsbeispielen anhand der Zeichnungen näher erläutert. Dabei zeigen:

Fig. 1 die keulenförmige, scharf gebündelte Strahlungscharakteristik eines Folgeradars mit Verfolgungsvolumen,

Fig. 2 ein Blockdiagramm eines Folgeradars mit Distanzverfolgung mittels halbiertem Distanztor und Quadraturkanal, wobei die Winkelverfolgungsstromkreise nicht eingezeichnet sind,

Fig. 3 eine Kompensationseinrichtung KE für Wetterechos,

Fig. 4 die ideale Charakteristik eines Frequenzdiskriminators FDK,

Fig. 5 ein Beispiel eines verzögernden Aktivfilters zweiter Ordnung,

Fig. 6 ein Beispiel eines differenzierenden Aktivfilters zweiter Ordnung,

Fig. 7 bis 12 verschiedene Modulationsschaltungen für das Referenzsignal, darunter

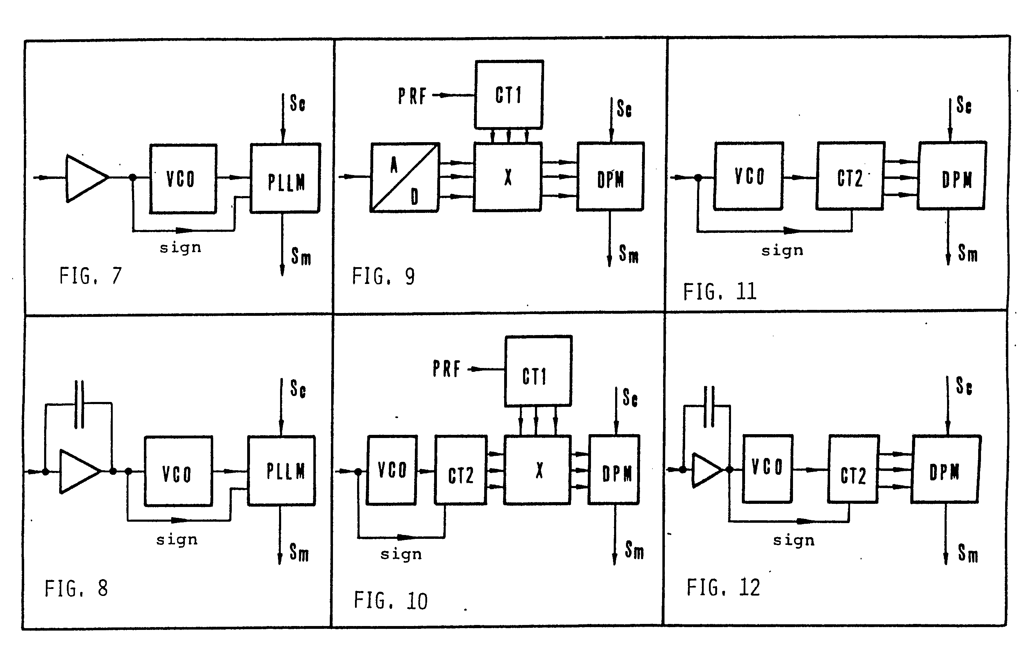

Fig. 7 einen Analogmodulator für einen Proportionalregler,

Fig. 8 einen Analogmodulator für einen Integralregler,

Fig. 9 einen Digitalmodulator für einen Proportionalregler,

Fig. 10 einen Digitalmodulator für einen Integralregler, wobei bei den Modulationsschaltungen gemäss Fig. 9 und Fig. 10 der Modulationstakt von der Pulswiederholungsfrequenz abhängt, also PRFsynchron ist,

Fig. 11 einen Digitalmodulator für einen Proportionalregler,

Fig. 12 einen Digitalmodulator für einen Integralregler, wobei bei den Modulationsschaltungen gemäss Fig. 11 und Fig. 12 der Modulationstakt freilaufend ist und

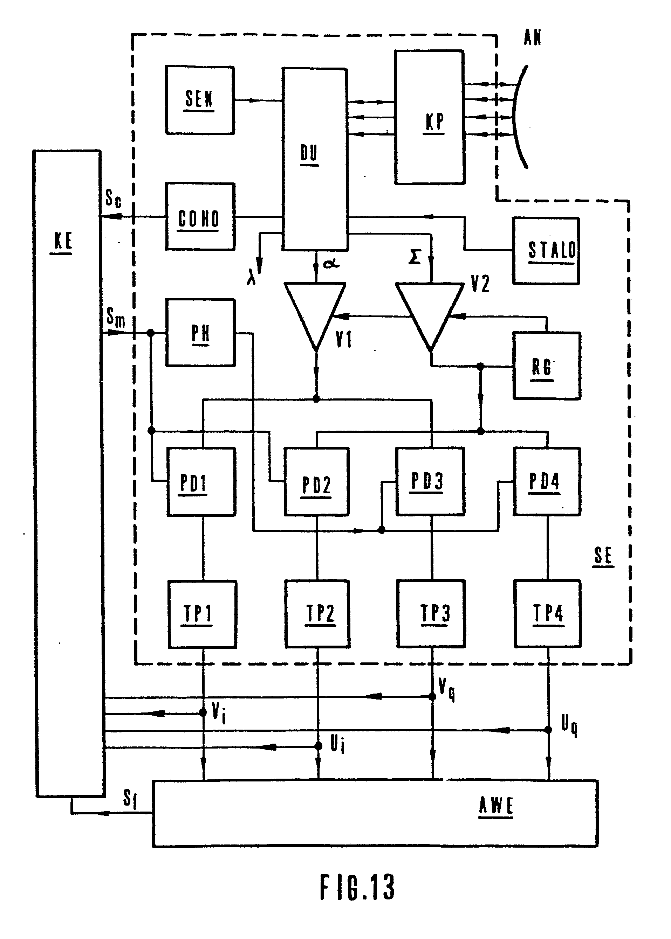

Fig. 13 ein Blockdiagramm eines Monopulsradars mit Quadraturkanal, wobei die Stromkreise für Höhenwinkel und Distanzverfolgung weggelassen wurden.

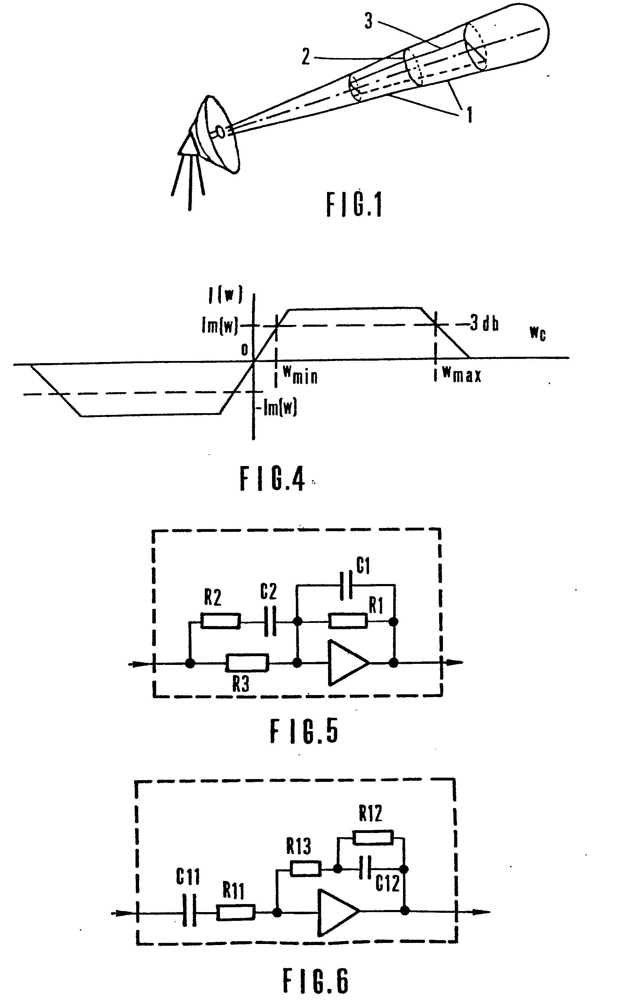

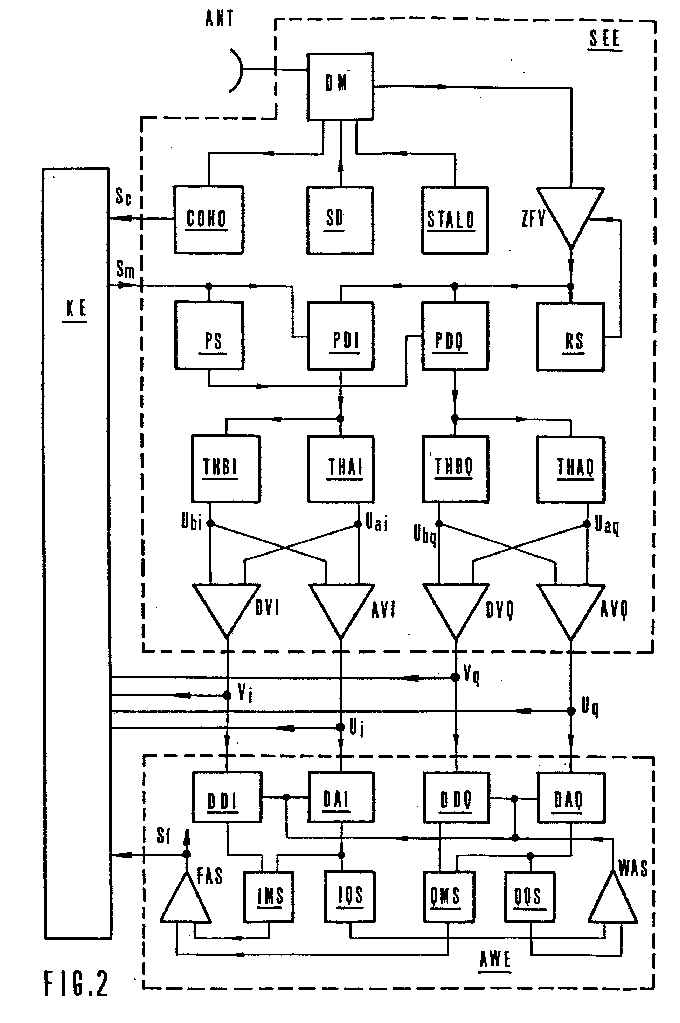

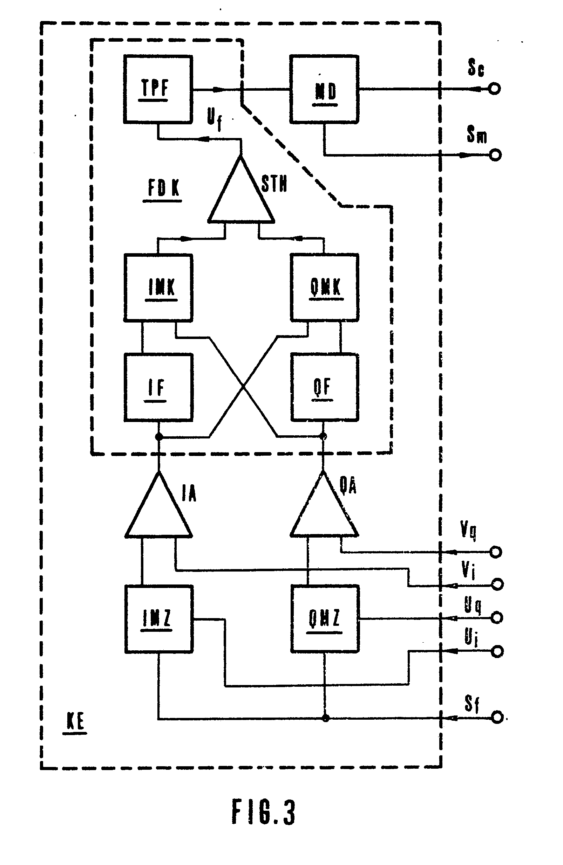

Gemäss Fig. 1 kann das Radarvolumen 1 durch eine senkrecht zur Achse der Strahlungscharakteristik orientierte Ebene 2 distanzmässig in zwei Distanzvolumenhälften oder durch eine die Achse der Strahlungscharakteristik enthaltende Ebene 3 winkelmässig in zwei Winkelvolumenhälften halbiert werden, wobei im letzten Fall dem Seiten- und dem Höhenwinkel eine besondere Bedeutung zukommt.

Die Dopplerfrequenz der bewegten Wetterechos wird im Radarvolumen des Folgeradars zusammen mit dem Zielecho, d.h. genau dort, wo die Wetterechos auch kompensiert werden sollen, gemessen. Die erfindungsgemässe Anordnung kann sowohl bei einer Distanzmess- als auch bei einer Winkelmesseinrichtung eingesetzt werden. Wesentlich für diese Anordnung ist lediglich, dass das Radarvolumen in zwei praktisch gleiche Hälften A und B aufgeteilt wird.

Das in Fig. 2 dargestellte Impulsdoppler-Folgeradargerät weist eine Antenne ANT, eine Sende-/Empfangseinrichtung SEE, eine Distanzauswerteeinrichtung AWE und eine Kompensationseinrichtung für Wetterechos KE auf. Dabei ist in der Sende-/Empfangseinrichtung SEE ein mit der Antenne ANT verbundener Duplexermischer DM vorhanden, dessen Ausgangssignal über einen regulierbaren Zwischenfrequenzverstärker ZFV einerseits dem ersten Eingang eines Quadratur-Phasenamplituden-Detektors PDQ und andererseits dem ersten Eingang eines Inphasen-Amplituden-Detektors PDI zugeführt wird, wobei ein Referenzsignal aus einem zweiten Ausgang des Duplexermischers DM über einen Kohärenzoszillator COHO und über die Kompensationseinrichtung KE einerseits direkt zum zweiten Eingang des Inphasen-Amplituden-Detektors PDI und andererseits über einen 90°-Phasenschieber PS zum zweiten Eingang des Quadratur-Phasenamplituden-Detektors PDQ geführt ist. Dabei wird das Ausgangssignal des Quadratur-Phasenamplituden-Detektors PDQ einerseits über eine Boxcarschaltung THAQ für die erste Torhälfte dem ersten Eingang eines Quadratur-Addierverstärkers AVQ und andererseits über eine Boxcarschaltung THBQ für die zweite Torhälfte dem ersten Eingang eines Quadraturdifferenzverstärkers DVQ zugeführt, wobei der Ausgang der Boxcarschaltung THAQ mit dem zweiten Eingang des Differenzverstärkers DVQ und der Ausgang der Boxcarschaltung THBQ mit dem zweiten Eingang des Addierverstärkers AVQ verbunden ist. Das Ausgangssignal Uq des Addierverstärkers AVQ ist gegebenenfalls über ein Tiefpassfilter dem ersten Eingang der Auswerteeinrichtung AWE und einem weiteren Eingang der Kompensationseinrichtung KE und das Ausgangssignal Vq des Differenzverstärkers DVQ gegebenenfalls über ein zweites Tiefpassfilter dem zweiten Eingang der Auswerteeinrichtung AWE und dem dritten Eingang der Kompensationseinrichtung KE zugeführt. Ausserdem ist der Duplexermischer DM wie üblich mit einem Sender SD und mit einem stabilen Lokaloszillator STALO verbunden.

Das Ausgangssignal des Inphasen-Amplituden-Detektors PDI wird ebenfalls einerseits über eine Boxcarschaltung THAI für die erste Torhälfte dem ersten Eingang eines Inphasenaddierverstärkers AVI und andererseits über eine Boxcarschaltung THBI für die zweite Torhälfte dem ersten Eingang eines Inphasendifferenzverstärkers DVI zugeführt, wobei der Ausgang der Boxcarschaltung THAI mit dem zweiten Eingang des Differenzverstärkers DVI und der Ausgang der Boxcarschaltung THBI mit dem zweiten Eingang des Addierverstärkers AVI verbunden ist. Das Ausgangssignal Ui des Addierverstärkers AVI ist gegebenenfalls über ein Tiefpassfilter dem dritten Eingang der Auswerteeinrichtung AWE und dem vierten Eingang der Kompensationseinrichtung KE und das Ausgangssignal Vi des Differenzverstärkers DVI gegebenenfalls über ein weiteres Tiefpassfilter dem vierten Eingang der Auswerteeinrichtung AWE und dem fünften Eingang der Kompensationseinrichtung KE zugeführt.

In der Sende-/Empfangseinrichtung SEE ist der Zwischenfrequenzverstärker ZFV durch eine einen Amplitudendetektor, eine Summentor- und eine Boxcarschaltung aufweisende Regelschaltung RS geregelt.

Zur Ausschaltung der Kompensationseinrichtung KE kann der Ausgang des Kohärenzoszillators COHO direkt mit dem Referenzeingang der Sende-/Empfangseinrichtung SEE, d.h. mit dem Eingang des Phasenschiebers PS und des Inphasen-Amplituden-Detektors PDI verbunden werden.

In der Auswerteeinrichtung AWE sind zwei Quadrierschaltungen QQS und IQS sowie vier je mit einem der Signale Uq, Vq, Ui bzw. Vi beauf-

schlagte Dopplerfilterschaltungen DAQ, DDQ, DAI und DDI und eine ein Distanz-Fehlerspannungssignal Sf liefernde Addierschaltung FAS vorhanden, deren erster Eingang mit dem Ausgang einer die Ausgangssignale der Dopplerfilterschaltungen DAI und DDI multiplizierenden Inphasen-Multiplizierschaltung IMS und deren zweiter Eingang mit dem Ausgang einer die Ausgangssignale der Dopplerfilterschaltungen DAQ und DDQ multiplizierenden Quadraturmultiplizierschaltung QMS verbunden ist. Ausserdem wird das Ausgangssignal der Dopplerfilterschaltung DAI über die Quadrierschaltung IQS dem ersten Eingang einer Addierschaltung WAS und das Ausgangssignal der Dopplerfilterschaltung DAQ über die Quadrierschaltung QQS dem zweiten Eingang der Addierschaltung WAS zugeführt, deren Ausgang mit je einem Regeleingang der Dopplerfilterschaltungen DAQ, DDQ, DAI und DDI verbunden ist.

Fig. 3 zeigt den Aufbau einer Kompensationseinrichtung KE mit einem Subtrahierer STH, der eingangsseitig einerseits über die Reihenschaltung eines Quadraturmultiplizierers QMZ, eines Quadraturaddierers QA, eines Qudaraturfilters QF und eines Quadraturmultiplikators QMK und andererseits über die Reihenschaltung eines Inphasenmultiplizierers IMZ, eines Inphasenaddierers IA, eines Inphasenfilters IF und eines Inphasenmultiplikators IMK mit dem Fehlerspannungssignal Sf beaufschlagt ist. Dabei ist der Ausgang des Inphasenaddierers IA mit dem zweiten Eingang des Quadraturmultiplikators QMK und der Ausgang des Quadraturaddiers QA mit dem zweiten Eingang des Inphasenmultiplikators IMK verbunden. Der zweite Eingang des Quadraturaddierers QA ist mit dem Eingangssignal Vq und der zweite Eingang des Inphasenaddierers IA ist mit dem Eingangssignal Vi beaufschlagt. Der zweite Eingang des Quadraturmultiplizierers QMZ ist mit dem Eingangssignal Uq und der zweite Eingang des Inphasenmultiplizierers IMZ ist mit dem Eingangssignal Ui beaufschlagt. Der Ausgang des Subtrahierers STH ist über ein Tiefpassfilter TPF mit dem Steuereingang des Modulators MD verbunden, dessen Ausgangssignal Sm dem Referenzeingang der Sende-/Empfangseinrichtung SEE zugeführt wird. Der andere Eingang des Modulators MD ist mit dem Ausgangssignal Sc des Kohärenzoszillators COHO beaufschlagt, wobei der Modulator MD beispielsweise ein Einseitenband- oder ein Phasenmodulator sein kann.

Die Schaltungsanordnung nach den Figuren 2 und 3 funktioniert nun folgendermassen: Ein von der Antenne ANT empfangenes Ziel und Echosignal wird von der Sende-/Empfangseinrichtung SEE und der Distanzauswerteeinrichtung AWE in bekannter Weise verarbeitet. Dabei sind zur Vereinfachung der Figuren nur die Signale angegeben, die einer Distanzauswertung entsprechen, obwohl das erfindungsgemässe Verfahren sowohl in einer Distanzmesseinrichtung als auch in einer Winkelmesseinrichtung Anwendung finden kann.

Es wird zunächst der Fall betrachtet, bei dem nur Echosignale des zu verfolgenden Flugkörpers (Ziel), jedoch keine Wetterechosignale empfangen werden. Am ersten Ausgang der Sende-/Empfangseinrichtung SEE erscheint demnach ein Summensignal

$$Uq = Uaq + Ubq = Uzq$$

wobei die Indizes a und b auf die eine oder die andere Torhälfte hindeuten, der Index z auf ein Zielsignal. Für das Differenzsignal am zweiten Ausgang gilt

$$Vq = Ubq - Uaq = - \varepsilon q \cdot Uzq$$

wodurch $\varepsilon q$ als ein Mass für die Zielexzentrizität definiert wird, welches alle Werte von $-1$ bis $+1$ durchlaufen kann. Daraus ergeben sich für Uaq und Ubq die Werte

$$Uaq = (\tfrac{1}{2}) \cdot Uzq \cdot (1 + \varepsilon q)$$

und

$$Ubq = (\tfrac{1}{2}) \cdot Uzq \cdot (1 - \varepsilon q)$$

Die Elimination der Bewegungskomponente des Zieles durch Subtraktion der Signale der beiden Radarvolumenhälften A und B beruht auf der Annahme, dass das Ziel im Radarvolumen in der Antennenkeule zentriert ist. Beim Auftreten eines Schleppfehlers, d.h. wenn sich das Ziel nicht im Zentrum des Radarvolumens befindet, ist diese Annahme nicht mehr erfüllt und bei der Subtraktion der Signale aus den beiden Volumenhälften A und B bleibt ein Rest des Zielsignales übrig. Dies ist unerwünscht und kann dadurch behoben werden, dass zu der obenerwähnten Differenz noch ein gewichteter und mit Vorzeichen behafteter Anteil der Summe der Signale aus den beiden Volumenhälften addiert wird.

Das im Quadraturmultiplizierer QMZ (Fig. 3) mit dem Distanzfehler-Spannungssignal Sf als Gewichtspannung multiplizierte Summensignal Uq = Uzq wird daher im Quadraturaddierer QA zum Differenzsignal Vq − εq · Uzq addiert, der dann als Resultat ein Zielsignal

$$Urzq = -\varepsilon q \cdot Uzq + Sf \cdot Uzq = Uzq \cdot (Sf - \varepsilon q)$$

liefert. Entsprechendes gilt für das Zielsignal Urzi des Inphasenkanals:

$$Urzi = Uzi \cdot (Sf - \varepsilon i)$$

Wird die Distanzfehlerspannung bzw. die Gewichtung Sf gleich der Exzentrizität $\varepsilon$ gewählt, so verschwinden die Zielsignale Urzq und Urzi in der Kompensationseinrichtung, d.h. dass allgemein die Zielsignale Urzq und Urzi Null werden, wenn Sf = εq = εi = ε gewählt wird.

Es wird nun der Fall betrachtet, in dem nur ein Wetterechosignal vorhanden ist. Nimmt man in den beiden Volumenhälften A und B im Mittel gleich starke, nicht korrelierte Wetterechosignale (Clutter) an, so sind auch deren Summe Uq = Ucq und Differenz Vq = Vcq untereinander nicht korreliert und im Mittel gleich stark. Nach der Gewichtung addieren sich die Leistungen und das Wetterechosignal Urc (c bedeutet Clutter) im Quadraturkanal wird:

$$Urcq = \sqrt{Ucq^2 + (Sf \cdot Ucq)^2} = Ucq \sqrt{1 + Sf^2}$$

Der Wetterechoanteil nimmt also mit von Null verschiedener Gewichtung zu. Es besteht also keine Gefahr, dass der Wetterechoanteil ebenfalls eliminiert wird. Entsprechendes gilt für den Inphasenkanal. Es kann auch eine andere als die vom Radar gelieferte Fehlerspannung Sf als Mass für die Zielexzentrizität dienen.

Am Ausgang des Quadraturaddierers QA und des Inphasenaddierers IA erscheint gemäss obiger Rechendarstellung je ein vom Zielecho befreites Signal Urcq bzw. Urci in der Reglerrückkopplungsschlaufe zur Kompensation der Wetterechos im Verfolgungstor, wobei die Signale Urci und Urcq sich in der Wetterechophase um 90° unterscheiden, d.h.,

$$Urci = Urc \cdot exp \; (jwt)$$

$$Urcq = Urc \cdot exp \; (j(wt \pm \frac{\pi}{2}))$$

worin das Vorzeichen von

$$\frac{\pi}{2}$$

dem Vorzeichen der Bewegungsrichtung des Wetterechos entspricht und w die Dopplerkreisfrequenz des Wetterechos darstellt.

Das Ausgangssignal des Subtrahierers STH wird als Differenz von Produkten gebildet, welche je aus den Signalen Urci, Urcq und deren gefilterten Werten Urci' und Urcq' gebildet werden.

Die Filter IF und QF haben gleichen Amplitudengang A(w) und gleichen Phasengang $\Phi$ (w), die von der komplexen Übertragungsfunktion G(w) bestimmt sind und auch als Real- R(w) und Imaginärkomponenten I(w) der Übertragungsfunktion definiert sind.

Nach dem Filter IF entsteht

$$Urci' = Urc \cdot [exp \; (jwt)] \cdot (R(w) + j \; I(w))$$

Für das Ausgangssignal des Filters QF gilt entsprechend

$$Urcq' = Urc \cdot [exp \; j(wt \pm \frac{\pi}{2})] \cdot (R(w) + j \; I(w))$$

In den Multiplikatoren QMK und IMK werden die Realteile der Eingangssignale wie folgt multipliziert:

$$Re(Urcq \cdot Re(Urci') = Uqi$$

und

$$Re(Urci) \cdot Re(Urcq') = Uiq$$

Hieraus folgt

$$Uqi = Urc^2 \cdot (\pm \; \sin wt) \cdot$$
$$[R(w) \cdot \cos wt - I(w) \cdot \sin wt]$$

und

$$Uiq = Urc^2 \cdot \cos wt \cdot$$
$$[\pm \; R(w) \cdot \sin wt \pm I(w) \cdot \cos wt]$$

Im Subtrahierer STH wird das Differenzsignal

$$UQI - UIQ = \pm \; Urc^2 \cdot I(w) = Uf$$

gebildet, das keinen Wechselspannungsanteil aufweist. Das Vorzeichen des Gleichspannungssignals Uf entspricht der Richtung der Wetterechogeschwindigkeit, während seine Grösse von der Imaginärkomponente der Filterübertragungsfunktion bei der Wetterechofrequenz w abhängt. Zudem ist das Ausgangssignal Uf proportional der Wetterecholeistung.

Bei gleichzeitigem Anliegen mehrerer Wetterechosignale verschiedener Frequenz $w_n$ und Amplitude Urcn weist das Ausgangssignal Ufn eine Gleichspannungskomponente auf, welche der Summe der gewogenen Leistungen der Einzelsignale entspricht.

$$Ufn = \overset{n}{\underset{1}{\Sigma}} \; Urcn^2 \cdot I(w_n).$$

Zusätzlich entstehen noch Wechselspannungskomponenten, welche mit den Frequenzdifferenzen aus den Einzelsignalen auftreten. Diese werden durch das nachgeschaltete Tiefpassfilter TPF unterdrückt. Das Signal Ufn dient als Fehlersignal des Regelkreises zur Unterdrückung der Wetterechos in der Einrichtung AWE. Deshalb muss der Frequenzgang I(w) des Frequenzdiskriminators FDK gewissen Anforderungen genügen. Fig. 4 zeigt eine ideale Frequenzdiskriminatorcharakteristik mit einem linearen Verlauf von I(w) zwischen den Werten + Im(w) für + $w_{min}$ und −Im(w) für −$w_{min}$, wobei die Spiegelung am Koordinatennullpunkt der schon erwähnten Vorzeichenumpolung durch den Wetterecho-geschwindigkeitsvektor entspricht. Für eine günstige Charakteristik müsste das Verhältnis $w_{max}/w_{min}$ (Bandbreite) möglichst gross und die Welligkeit dazwischen möglichst klein sein. Im Bereich des Nullpunktes muss Linearität angestrebt werden. Filterschaltungen mit einer Filtercharakteristik für I(w) nach Fig. 4 können beispielsweise durch die Schaltungen nach Fig. 5 und 6 recht gut angenähert realisiert werden. Es genügen jedoch auch einfache Hoch- oder Tiefpassfilter erster Ordnung.

Im Frequenzdiskriminator FDK können die Filter QF und IF unter sich gleich sein und beispielsweise eine leicht realisierbare Übertragungsfunktion nach den Formeln

$$Gv \; (\Omega) = \frac{1}{1 + j\Omega}$$

oder

$$Gd \; (\Omega) = \frac{j\Omega}{1 + j\Omega}$$

aufweisen, worin $\Omega = w \cdot T$ die normierte Frequenz und T die Zeitkonstante ist.

Solche Filter, deren Frequenzverlauf des Imaginärteils bei tiefen Frequenzen proportional zur Frequenz ist, sind mit RC-Gliedern einfach zu realisieren.

Bei erhöhten Anforderungen an die Bandbreite nimmt man einfache Filter höherer Ordnung. Fig. 5 zeigt eine mögliche Realisierung eines Filters nach der Formel

$$Gvv \; (\Omega) = (1 + pT1)(1 = pT2)^{-1}(1 + pT3)^{-1}$$
$$\text{mit } p = jw$$

als Aktivfilter. Dabei ist der Eingang des Filters ein Anschluss, der einerseits über die Reihenschaltung eines Widerstandes R2 und eines Kondensators C2 und andererseits über einen Widerstand R3 mit dem Eingang eines Operationsverstärkers verbunden ist, dessen Ausgang den Ausgang des Filters bildet und über die Parallelschaltung eines Widerstandes R1 und eines Kondensators C1 mit seinem Eingang verbunden ist.

Fig. 6 zeigt eine mögliche Realisierung eines Filters nach der Formel

$$Gdd\ (\Omega) = T2 \cdot T3 \cdot p\ (1 + pT1)(1 + pT2)^{-1}(1 + pT3)^{-1} \cdot (T1)^{-1}$$

als Aktivfilter. Dabei ist der Eingang dieses Filters ein Anschluss, der über einen Kondensator C11 und einen Widerstand R11 mit dem Eingang eines Operationsverstärkers verbunden ist, dessen Ausgang den Ausgang des Filters bildet und über die Reihenschaltung eines Kondensators C12 und eines Widerstandes R13 mit seinem Eingang verbunden ist, wobei dem Kondensator C12 ein Widerstand R12 parallelgeschaltet ist.

Zur automatischen Kompensation der bewegten Wetterechos muss ein den Zustand Ufn = 0 suchender Regelkreis zwischen dem Fehlerspannungssignal Ufn und dem Referenzsignal am Eingang der Sende-/Empfangseinrichtung SEE über eine Modulationsschaltung geschlossen werden. Beinhaltet eine solche Modulationsschaltung MD einen Einseitenbandmodulator, so gibt sie ein Ausgangssignal ab, dessen Frequenz der Summe der Frequenz $w_{ref}$ beispielsweise des COHO-Signals bei empfangskohärenten Radarsystemen bzw. des Referenzsignals bei vollkohärenten Systemen und der Frequenz $w_{ck}$ eines vom Fehlerspannungssignal Ufn abhängigen Kompensationssignals entspricht. Da die Auswertefrequenz der Ausgangssignale der Phasenamplitudendetektoren PDQ und PDI (Fig. 2) der Differenz der Frequenzen von deren Eingangssignalen entspricht, wird die Frequenz $w_{ck}$ des Kompensationssignals derart geregelt, dass die Frequenz $w_{ck}$ möglichst gleich wie die Frequenz $w_c$ wird. Damit ist das Wetterechodopplersignal in einen so tiefen Frequenzbereich verschoben, dass es von den Dopplerfiltern unterdrückt wird. Aber auch die Dopplerfrequenz des Zielsignals wird um denselben Betrag verschoben und muss deshalb nach Bedarf bei der Pulswiederholungsfrequenz-Steuerung berücksichtigt werden, um Blindgeschwindigkeiten zu vermeiden. Da die Arbeitsweise der Distanzauswerteeinrichtung AWE nach Fig. 2 an sich bekannt ist, braucht sie hier nicht näher beschrieben zu werden.

Für die Realiserung des Modulators MD beispielsweise als Einseitenbandmodulator sind eine Reihe von Möglichkeiten denkbar. Sie unterscheiden sich durch die Anwendung einer Proportional- oder einer Integralregelung, beide in Analog- oder Digitaltechnik. Bei Digitaltechnik kann ausserdem der Modulationstakt pulswiederholungsfrequenzsynchron (PRF) oder frei gewählt werden. Die daraus entstehenden sechs Kombinationsmöglichkeiten sind in den Fig. 7 bis 12 in Blockschaltbildern festgehalten. In diesen Figuren stellen CT1 und CT2 Zähler, X einen digitalen Multiplikator, A/D einen Analog-/Digital-Wandler, PLLM einen PLL-Modulator, DPM einen digitalen Phasenmodulator und VCO einen spannungsgesteuerten Oszillator dar. Da diese Methoden bekannt sind, werden sie hier nicht näher beschrieben.

In Fig. 13 ist die zur Seitenwinkelverfolgung dienende Teilschaltung eines Monopulsfolgeradars mit Quadraturkanal dargestellt. Diese Anordnung weist eine Antenne AN und eine Sende-/Empfangseinrichtung SE sowie eine Auswerteeinrichtung AWE und eine Kompensationseinrichtung KE der bereits beschriebenen Art auf. In der Sende-/Empfangseinrichtung SE ist ein Duplexermischer DU vorhanden, der über je einen Eingang mit einem Sender SEN und einem stabilen Lokaloszillator STALO und über geeignete Ausgänge mit einem Kohärenzoszillator COHO, einem Komparator KP und je einem Zwischenfrequenzverstärker V1 und V2 verbunden ist. Der Komparator KP ist in bekannter Weise mit der Antenne AN verbunden.

Das Ausgangssignal Sm der Kompensationseinrichtung KE wird direkt den Modulationseingängen von zwei Phasenamplitudendetektoren PD1 und PD2 und über einen 90°-Phasenschieber PH den Modulationseingängen von zwei weiteren Phasenamplitudendetektoren PD3 und PD4 zugeführt. Dabei sind die Signaleingänge der Phasenamplitudendetektoren PD1 und PD3 mit dem Ausgang des Zwischenfrequenzverstärkers V1 und die Signaleingänge der Phasenamplitudendetektoren PD2 und PD4 mit dem Ausgang des Zwischenfrequenzverstärkers V2 verbunden; mit diesem Ausgang ist ausserdem der Eingang einer Regelschaltung RG verbunden, die einen Amplitudendemodulator, ein Summentor und eine Boxcarschaltung umfasst. Das Ausgangssignal der Regelschaltung RG dient zur Regelung der Zwischenfrequenzverstärker V1 und V2. Die Ausgänge der Phasenamplitudendetektoren PD1, PD2, PD3 und PD4 sind über je ein Tiefpassfilter TP1, TP2, TP3 und TP4 mit je einem Eingang der Auswerteeinrichtung AWE verbunden. Bei Fig. 2 erfolgt die Differenzbildung zwischen den Volumenhälften in den Differenzbildeschaltungen DVQ und DVI, während sie bei Fig. 13 bereits im Komparator KP gebildet wird.

## Patentansprüche

1. Anordnung zur Unterdrückung von Wetterechos, die neben dem Flugkörperdopplersignal als weitere Dopplersignale in einem Impulsdoppler-Folge-Radargerät störend auftreten können, wobei zur Unterdrückung des Wetterecho-Dopplersignals eine Rückkopplungsschleife vom Empfängerausgang über einen Diskriminator (FDK) zu einem Modulator (MD) des einem Phasenamplitudendetektor (PD) zuzuführenden Phasenreferenzsignals vorgesehen ist, und wobei ferner der Gleichspannungsanteil des Diskriminatorausgangssignals (Uf) mindestens angenähert ein. Mass für die Frequenz (w) des Wetterecho-Dopplersignals darstellt, das durch den Regelkreis auf einen Wert, der kleiner als die untere Grenzfrequenz der Dopplerfilter (DD, DA) ist, geregelt und damit von den Dopplerfiltern unterdrückt wird, dadurch gekennzeichnet, dass zur Unterdrückung des Wetterecho-Dopplersignals in Radargeräten mit Quadraturkanal, bei denen sowohl ein durch Subtraktion der Quadratursignale (Ubq, Uaq) aus den beiden Volumenhälften eines Quadraturkanals gewonnenes Quadraturdifferenzsignal (Vq) als auch ein durch Subtraktion der Inphasensignale (Ubi, Uai) aus den beiden Volumenhälften eines Inphasenkanals gewonnenes Inphasendifferenzsignal (Vi) vorhanden sind, der Diskriminator (FDK) ein Nullfrequenzdiskriminator mit zwei Eingängen ist, dessen erster Eingang mit dem Quadraturdifferenzsignal (Vq) und dessen zweiter Eingang mit dem Inphasendifferenzsignal (Vi) beaufschlagt ist, um daraus das Vorzeichen des Ausgangssignals (Uf) des Nullfrequenzdiskriminators als Richtung der Wetterechogeschwindigkeit und die Amplitude dieses Ausgangssignals (Uf) als Mass für die Wetterechofrequenz (w) zu deuten.

2. Anordnung nach Anspruch 1 dadurch gekennzeichnet, dass im Nullfrequenzdiskriminator (FDK) eine Einrichtung (QA, IA) vorhanden ist, in der zu dem Quadraturdifferenzsignal (Vq) ein gewichteter Anteil der Summe (Uq) der Quadratursignale und zu dem Inphasendifferenzsignal (Vi) ein gewichteter Anteil der Summe (Ui) der Inphasensignale hinzuaddiert wird, wobei die Gewichtung durch eine Funktion der Exzentrizität (ε) gebildet ist.

3. Anordnung nach Anspruch 1, dadurch gekennzeichnet, dass der Nullfrequenzdiskriminator (FDK) einen Subtrahierer (STH) aufweist, der eingangsseitig einerseits über die Reihenschaltung eines Quadraturfilters (QF) und eines Quadraturmultiplikators (QMK) mit dem Quadraturdifferenzsignal (Vq) und andererseits über die Reihenschaltung eines Inphasenfilters (IF) und eines Inphasenmultiplikators (IMK) mit dem Inphasendifferenzsignal (Vi) beaufschlagt ist, wobei der Eingang des Inphasenfilters (IF) mit einem weiteren Eingang des Quadraturmultiplikators (QMK) und der Eingang des Quadraturfilters (QF) mit einem weiteren Eingang des Inphasenmultiplikators (IMK) verbunden ist, und dass der Steuereingang des Modulators (MD) an den Ausgang des Subtrahierers (STH) angeschlossen ist.

4. Anordnung nach den Ansprüchen 2 und 3, dadurch gekennzeichnet, dass das Quadraturdifferenzsignal (Vq) über einen Quadraturaddierer (QA) dem Eingang des Quadraturfilters (QF) und das Inphasendifferenzsignal (Vi) über einen Inphasenaddierer (IA) dem Eingang des Inphasenfilters (IF) zugeführt wird, wobei der andere Eingang des Quadraturaddierers (QA) mit dem Quadratursummensignal (Uq) und der andere Eingang des Inphasenaddierers (IA) mit dem Inphasensummensignal (Ui) beaufschlagt ist, und dass das Quadratursummensignal (Uq) über einen Quadraturmultiplizierer (QMZ) dem Eingang des Quadraturaddierers (QA) und das Inphasensummensignal (Ui) über einen Inphasenmultiplizierer (IMZ) dem Eingang des Inphasenaddierers (IA) zugeführt wird, wobei die weiteren Eingänge dieser Multiplizierer (QMZ, IMZ) mit dem Fehlerspannungssignal (Sf) beaufschlagt sind.

## Revendications

1. Dispositif pour supprimer les échos météorologiques (échos dus au mauvais temps) qui peuvent apparaître, en plus du signal Doppler du corps volant, sous la forme de signaux Doppler supplémentaires dans un appareil radar de poursuite à effet Doppler à impulsions, du type dans lequel il est prévu, pour supprimer les signaux Doppler dus aux échos météorologiques, une boucle à réaction entre la sortie du récepteur et un modulateur (MD) du signal de référence de phase à appliquer à un détecteur d'amplitude de phase (PD) et passant par un discriminateur (FDK), et dans lequel la composante de la tension continue du signal de sortie (Uf) du discriminateur est au moins approximativement une mesure pour la fréquence (w) du signal Doppler de l'écho météorologique, qui est ajusté par le circuit de régulation à une valeur qui est inférieure à la fréquence limite inférieure des filtres Doppler (DD, DA) et qui de ce fait est supprimé par les filtres Doppler, caractérisé par le fait que pour supprimer des signaux des échos météorologiques dans les appareils radar à canal en quadrature de phase, dans lesquels sont présents un signal différentiel en quadrature de phase (Vq) obtenu par soustraction des signaux en quadrature de phase (Ubq, Uaq) des deux moitiés du volume d'un canal à quadrature de phase ainsi qu'un signal différentiel en phase (Vi) obtenu par soustraction des signaux en phase (Ubi, Uai) des deux moitiés de volume d'un canal en phase, et que le discriminateur (FDK) est un discriminateur de fréquence zéro à deux entrées dont la première reçoit le signal différentiel en quadrature de phase (Vq) et dont la seconde reçoit le signal différentiel en phase (Vi) en vue d'indiquer le signe du signal de sortie (Uf) du discriminateur de la fréquence zéro en tant que direction de la vitesse de l'écho météorologique et l'amplitude de ce signal de sortie (Uf) comme mesure de la fréquence (w) de l'écho météorologique.

2. Dispositif selon la revendication 1, caractérisé par le fait que le discriminateur (FDK) de la fréquence zéro comporte un montage dans lequel on ajoute au signal différentiel en quadrature de phase (Vq) une partie pondérée de la somme (Uq) des signaux en quadrature de phase et au signal différentiel en phase (Vi) une partie pondérée de la somme (Ui) des signaux en phase, la pondération étant formée par une fonction d'excentrement (ε).

3. Dispositif selon la revendication 1, caractérisé par le fait que le discriminateur de la fréquence zéro (FDK) comporte un soustracteur (STH) qui reçoit du côté entrée d'une part, par l'intermédiaire d'un circuit série constitué par un filtre en quadrature de phase (QF) et d'un multiplicateur en quadrature de phase (QMK), le signal différentiel en quadrature de phase (Vq) et d'autre part, par l'intermédiaire du montage série constitué par un filtre en phase (IF) et un multiplicateur en phase (IMK), le signal différentiel en phase (Vi), l'entrée du filtre en phase (IF) étant reliée à une autre entrée du multiplicateur en quadrature de phase (QMK) et l'entrée du filtre en quadrature de phase (QF) étant reliée à une autre entrée du multiplicateur en phase (IMK), et que l'entrée de commande du modulateur (MD) est reliée à la sortie du soustracteur (STH).

4. Dispositif selon les revendications 2 et 3, caractérisé par le fait que le signal différentiel en quadrature de phase (Vq) est appliqué par l'intermédiaire d'un additionneur en quadrature de phase (QA) à l'entrée du filtre en quadrature de phase (QF) et le signal différentiel en phase (Vi) est appliqué par l'intermédiaire de l'additionneur en phase (IA) à l'entrée du filtre en phase (IF), l'autre entrée de l'additionneur en quadrature de phase (QA) recevant le signal de sommation en quadrature de phase (Uq) et l'autre entrée de l'additionneur en phase (IA) recevant le signal de sommation en phase (Ui) et que le signal de sommation en quadrature de phase (Uq) est appliqué par l'intermédiaire d'un multiplicateur en quadrature de phase (QMZ) à l'entrée de l'additionneur en quadrature de phase (QA) et que le signal de sommation en phase (Ui) est appliqué par l'intermédiaire d'un multiplicateur en phase (IMZ) à l'entrée de l'additionneur en phase (IA), les autres entrées de ces multiplicateurs (QMZ, IMZ) recevant le signal de tension d'erreur (Sf).

## Claims

1. An arrangement for suppressing weather echoes in a pulsed Doppler tracking radar device which can occur in addition to the flying target Doppler signal in a disturbing fashion as further Doppler signals, wherein in order to suppress the weather echo Doppler signals, there is provided a feedback loop from the receiver output via a discriminator (FDK) to a modulator (MD) of a phase-reference signal which is to be fed to a phase-amplitude detector (PD), and wherein furthermore the direct current component of the discriminator-output signal (Uf) is at least approximately a measure for the frequency (w) of the weather echo Doppler signal that is adjusted by means of the regulating circuit to a value smaller than the lower limiting frequency of the Doppler filters (DD, DA), and thus suppressed by the Doppler filters, characterised in that in order to suppress the weather echo Doppler signal in radar devices comprising a quadrature channel, wherein there are present both a quadrature-difference signal (Vq) obtained by subtraction of the quadratur signals (Ubq, Uaq) from the two volume halves of a quadrature channel and an in-phase difference signal (Vi) obtained by subtraction of the in-phase signals (Ubi, Uba) from the two volume halves of an in-phase channel, the discriminator (FDK) is a zero-frequency discriminator with two inputs, whose first input is fed with the quadrature-difference signal (Vq) and whose second input is fed with the in-phase difference signal (Vi), in order to infer the sign of the output signal (Uf) of the zero-frequency discriminator and the direction of the weather-echo velocity therefrom and to use the amplitude of this output signal (Uf) as a measure of the weather-echo frequency (w).

2. An arrangement as claimed in claim 1, characterised in that the zero-frequency discriminator (FDK) comprises a device (QA, IA) in which a weighted part of the sum (Uq) of the quadrature signals is added to the quadrature-difference signal (Vq) and a weighted part of the sum (Ui) of the in-phase signals is added to the in-phase difference signal (Vi), the weighting being formed by a function of the eccentricity (ε).

3. An arrangement as claimed in claim 1, characterised in that the zero-frequency discriminator (FDK) has a subtractor (STH) to whose input is fed the quadrature-difference signal (Vq) via the series connection of a quadrature filter (QF) and a quadrature multiplier (QMK), together with the in-phase difference signal (Vi) via the series connection of an in-phase filter (IF) and an in-phase multiplier (IMK), the input of the in-phase filter (IF) being connected to a further input of the quadratur multiplier (QMK) and the input of the quadrature filter (QF) being connected to a further input of the in-phase multiplier (IMK), and the control input of the modulator (MD) being connected to the output of the subtractor (STH).

4. An arrangement as claimed in claims 2 and 3, characterised in that the quadratur-difference signal (Vq) is fed to the input of the quadrature filter (QF) by means of a quadrature adder (QA) and the in-phase difference signal (Vi) is fed to the input of the in-phase filter (IF) by means of an in-phase adder (IA), the other input of the quadrature adder (QA) being fed with quadratur summation signal (Uq) and the other input of the in-phase adder (IA) being fed with the in-phase summation signal (Ui), and the quadrature-summation signal (Uq) being supplied to the input of the quadrature adder (QA) by means of a quadrature multiplier (QMZ) and the in-phase summation signal (Ui) supplied to the input of the in-phase adder (IA) by means of an in-phase multiplier (IMZ), the further inputs of these multipliers (QMZ, IMZ) being fed with the fault-voltage signal (Sf).

0014242

FIG.1

FIG.4

FIG.5

FIG.6

9

**0014242**

FIG.2

**FIG.3**

FIG. 7

FIG. 8

FIG. 9

FIG. 10

FIG. 11

FIG. 12

0 014 242

FIG.13